(19) Europäisches Patentamt / European Patent Office / Office européen des brevets

(11) **EP 1 784 561 B1**

(12) **FASCICULE DE BREVET EUROPEEN**

(45) Date de publication et mention
de la délivrance du brevet:
**26.09.2007 Bulletin 2007/39**

(51) Int Cl.:
*F01N 3/021* *(2006.01)*    *F01N 3/08* *(2006.01)*
*F02D 41/02* *(2006.01)*    *F01N 9/00* *(2006.01)*

(21) Numéro de dépôt: **05778249.2**

(22) Date de dépôt: **21.06.2005**

(86) Numéro de dépôt international:
**PCT/FR2005/050473**

(87) Numéro de publication internationale:
**WO 2006/005873 (19.01.2006 Gazette 2006/03)**

(54) **SYSTÈME D'EVALUATION DE L'ÉTAT DE CHARGE EN SUIES DE MOYENS DE DÉPOLLUTION**

SYSTEM ZUM BEWERTEN DES GRADS VON RUSSLADUNG IN REINIGUNGSMITTELN

SYSTEM FOR EVALUATING DEGREE OF SOOT LOADING IN DEPOLLUTION MEANS

(84) Etats contractants désignés:
**AT BE BG CH CY CZ DE DK EE ES FI FR GB GR
HU IE IS IT LI LT LU MC NL PL PT RO SE SI SK TR**

(30) Priorité: **23.06.2004 FR 0406864**

(43) Date de publication de la demande:
**16.05.2007 Bulletin 2007/20**

(73) Titulaire: **PEUGEOT CITROËN AUTOMOBILES
S.A.**
**78140 Velizy Villacoublay (FR)**

(72) Inventeur: **COLIGNON, Christophe**
**F-92300 LEVALLOIS PERRET (FR)**

(74) Mandataire: **Pinchon, Odile et al
Peugeot Citroën Automobiles SA
Propriété Industrielle (LG 081)
18, Rue des Fauvelles
92250 La Garenne-Colombes (FR)**

(56) Documents cités:
**EP-A- 1 234 959        EP-A- 1 281 843
FR-A- 2 801 635        FR-A- 2 829 798**

## Description

La présente invention concerne un système d'évaluation de l'état de charge en suies de moyens de dépollution intégrés dans une ligne d'échappement d'un moteur de véhicule automobile, voir FR-A-2829798.

Un tel moteur peut être associé à des moyens à rampe commune d'alimentation en carburant de cylindres de celui-ci, selon au moins une post-injection.

Une telle post-injection est, de façon classique, une injection de carburant après le point mort haut du cylindre considéré.

Ces moyens d'alimentation sont adaptés pour mettre en oeuvre, à iso-couple, par modification de paramètres de contrôle de fonctionnement du moteur, différentes stratégies de régénération permettant d'obtenir des niveaux thermiques différents dans la ligne d'échappement.

Ainsi par exemple, des moyens d'alimentation mettant en oeuvre des stratégies de régénération dites normale, de niveau 1, de niveau 2 et/ou de niveau 2 surcalibré, ont déjà été proposés.

On sait en effet que pour assurer la régénération des moyens de dépollution tels qu'un filtre à particules, les suies piégées dans celui-ci sont brûlées grâce à la thermique fournie par le moteur et à l'exotherme réalisé par la conversion des HC et du CO sur des moyens formant catalyseur d'oxydation, placés par exemple en amont du filtre à particules.

Cette combustion peut être assistée par un élément catalyseur mélangé aux suies, issu par exemple d'un additif d'aide à la régénération, mélangé au carburant d'alimentation du moteur ou bien par un catalyseur déposé directement sur les parois du filtre à particules (filtre à particules catalysé).

Plus les niveaux thermiques dans la ligne d'échappement en entrée du filtre à particules sont élevés, plus la durée de régénération du filtre est courte.

L'un des principaux problèmes liés à l'utilisation d'un filtre à particules est sa régénération. En effet, tout au long de l'utilisation d'un.véhicule équipé d'un filtre à particules, celui-ci s'encrasse. Les différents résidus qui s'y entassent peuvent être principalement de quatre origines différentes. En effet, des résidus peuvent être formés d'éléments métalliques provenant du moteur ou de la ligne d'échappement ou de particules non filtrées à l'admission. D'autres résidus peuvent être formés par des cendres provenant du lubrifiant du moteur ou encore des cendres provenant du carburant d'alimentation de celui-ci. Enfin, d'autres résidus peuvent être formés par des résidus de combustion d'un additif d'aide à la régénération. On sait en effet, que de tels additifs peuvent être utilisés et être mélangés au carburant d'alimentation du moteur pour abaisser la température de combustion des suies piégées dans le filtre à particules.

Dans un concept de filtre à particules utilisant un additif d'aide à la régénération permettant de favoriser la combustion des suies, ces quatre éléments s'accumulent dans le filtre. Dans le cas où un tel additif n'est pas utilisé, par exemple dans le cas des filtres à particules imprégnés ou catalysés, seuls trois de ces éléments sont présents dans le filtre, ce qui réduit le volume de résidus accumulés pour un kilométrage parcouru donné.

Cependant quel que soit le concept utilisé, le filtre à particules s'encrasse progressivement réduisant ainsi le volume disponible pour le stockage des particules. De ce fait, pour préserver la tenue thermomécanique du filtre, il faut régénérer ce filtre de plus en plus souvent, ce qui se traduit par une élévation de la surconsommation de carburant liée au filtre à particules dans le cas par exemple où la régénération se fait par utilisation de post-injections ou d'un brûleur et par une dilution de l'huile de lubrification du moteur par le carburant post-injecté avec un risque de casse du moteur.

Par ailleurs, la réduction du volume utile au stockage des suies engendre des pertes de charge de plus en plus élevées aux bornes du filtre, ce qui se traduit à la fois par une augmentation de la consommation en carburant du véhicule hors phase de régénération et un risque de casse du moteur, par exemple si la pression différentielle aux bornes du filtre est trop forte et provoque une réouverture des soupapes.

Il est donc nécessaire de régénérer le filtre au bout d'un certain kilométrage parcouru lorsque le volume disponible pour le stockage des particules devient trop faible.

Deux véhicules ayant parcouru le même nombre de kilomètres peuvent avoir accumulé une quantité de résidus très différente l'un de l'autre en fonction du type de roulage de ces véhicules. Par exemple, un roulage en ville avec une consommation moyenne de carburant de 10 litres aux 100 kilomètres engendre 67% de résidus de combustion d'additif de plus qu'un roulage sur route ouverte avec une consommation moyenne de 6 litres aux 100 kilomètres. Il convient alors d'optimiser la fréquence de régénération du filtre à particules en évaluant au mieux l'état de charge de ce type de moyens de dépollution.

Le but de l'invention est donc de résoudre ces problèmes.

A cet effet, l'invention a pour objet un système d'évaluation de l'état de charge en suies de moyens de dépollution intégrés dans une ligne d'échappement d'un moteur de véhicule automobile, caractérisé en ce qu'il comporte des moyens de détermination du type de roulage du véhicule, des moyens de détermination, en fonction de ce type de roulage déterminé, d'une masse de carbone élémentaire émise par le moteur, des moyens de cumul de ces masses élémentaires durant le fonctionnement du moteur pour obtenir une masse totale, des moyens de calcul du volume de cendres de l'huile de lubrification du moteur, des moyens de calcul du volume de cendres du carburant d'alimentation du moteur, des moyens de calcul du volume utile des moyens de dépollution à partir d'un volume total de ces moyens à l'état neuf ou nettoyé et des volumes de cendres calculés précédemment, et des moyens de calcul de l'état de charge des moyens de dépollution à partir de la masse totale, du volume utile et de la densité maximale des dépôts sur les moyens de dépollution.

Selon d'autres caractéristiques, ce système d'évaluation comporte en outre :

- des moyens de correction de la masse élémentaire déterminée, en fonction de la température du liquide de refroidissement du moteur et de la pression atmosphérique ;
- des moyens de calcul du volume de résidus de combustion d'un additif mélangé au carburant d'alimentation du moteur raccordés aux moyens de calcul du volume utile ;
- des moyens de comparaison de l'état de charge calculé à des valeurs de seuil de charge faible, moyen bas et moyen haut pour délivrer des informations d'état de charge faible, moyen bas, moyen haut ou élevé des moyens de dépollution ;
- des moyens de mesure de la température en amont des moyens de dépollution et des moyens de comparaison de celle-ci à une valeur de seuil de régénération spontanée des moyens de dépollution pour, si la température en amont du filtre dépasse cette valeur de seuil pendant une période de temps prédéterminée, détecter une régénération spontanée des moyens de dépollution ;
- les moyens de dépollution comprennent un filtre à particules ;
- le filtre à particules est catalysé ;
- les moyens de dépollution comprennent un piège à NOx ;
- les moyens de dépollution sont imprégnés avec une formulation SCR, assurant une fonction d'oxydation CO/HC ;
- le carburant comporte un additif destiné à se déposer avec des particules auxquelles il est mélangé, sur les moyens de dépollution pour faciliter leur régénération ;
- le carburant comporte un additif formant piège à NOx ; et
- le moteur est associé à un turbocompresseur.

L'invention sera mieux comprise à la lecture de la description qui va suivre donnée uniquement à titre d'exemple et faite en se référant aux dessins annexés sur lesquels :

- la Fig. 1 représente un schéma synoptique illustrant l'implantation de moyens de dépollution dans une ligne d'échappement d'un moteur de véhicule automobile ; et
- la Fig. 2 représente un schéma synoptique illustrant la structure et le fonctionnement d'un système d'évaluation selon l'invention.

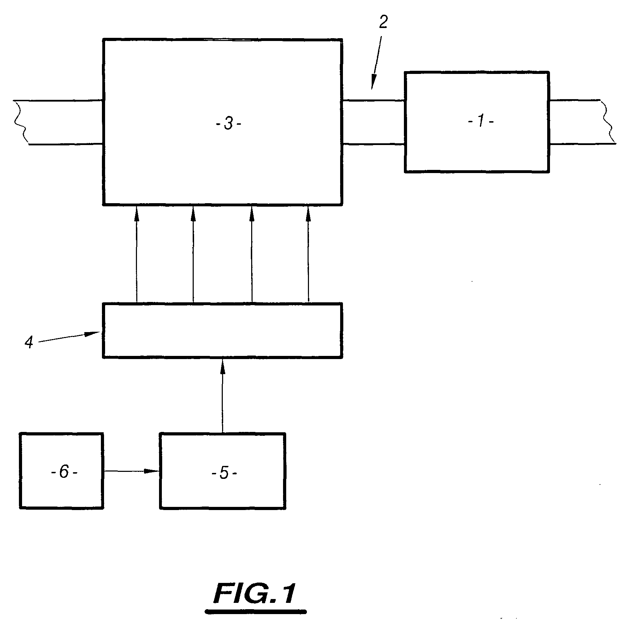

On a en effet illustré sur la Fig. 1, des moyens de dépollution désignés par la référence générale 1, comprenant par exemple un filtre à particules, intégrés dans une ligne d'échappement 2 d'un moteur 3, par exemple Diesel, d'un véhicule automobile.

Ce moteur est associé par exemple, à des moyens à rampe commune d'alimentation en carburant désignés par la référence générale 4, dont le fonctionnement est piloté par un calculateur désigné par la référence générale 5, adapté pour mettre en oeuvre différentes stratégies de pilotage mémorisées dans des moyens de stockage désignés par la référence générale 6 et associés à ce calculateur 5.

Le but du système selon l'invention est d'estimer de façon la plus précise possible à tout instant, l'état de charge en suies des moyens de dépollution.

Pour cela, il convient d'évaluer cet état de charge et de déterminer si la masse de carbone présente dans ce filtre est suffisante par exemple pour assurer une régénération totale du filtre ou est trop élevée et présente alors des risques d'endommagement pour les moyens de dépollution voire la tenue du moteur.

Le principe du système d'évaluation selon l'invention consiste à calculer la masse de carbone élémentaire émise par le moteur, pour les conditions de roulage en cours du véhicule, à cumuler ces masses élémentaires, c'est-à-dire intégrer dans le temps les émissions du moteur à la source, à calculer le volume utile du filtre en intégrant l'encrassement de celui-ci, par les différents résidus, provenant notamment de l'additif, puis à calculer l'état de charge du filtre, information qui sera ensuite prise en compte par des modules de déclenchement d'une régénération du filtre par exemple.

Des indicateurs pour les services après-vente du constructeur peuvent également être calculés.

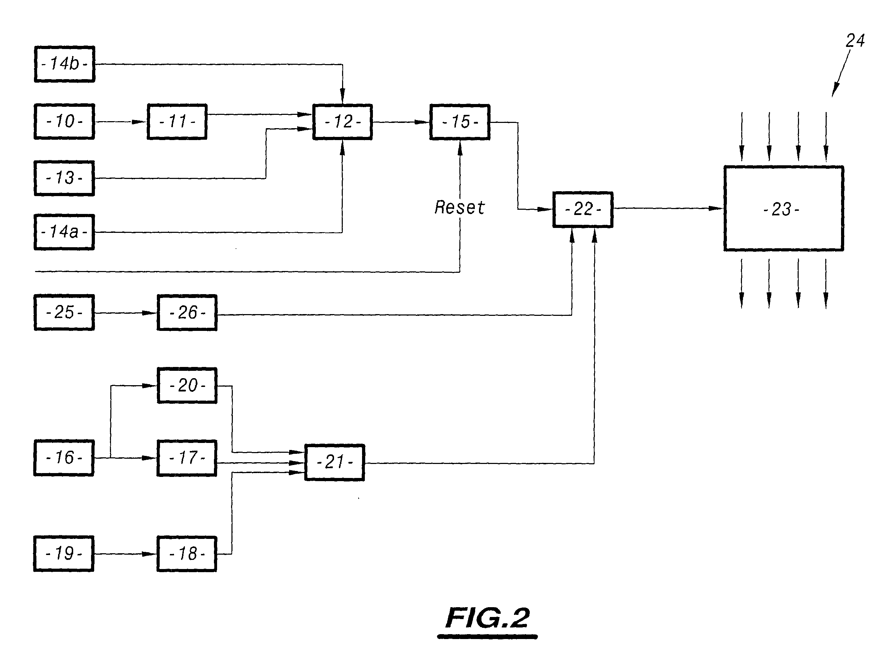

La Fig. 2 illustre cette évaluation.

En fait, dans le système selon l'invention, le calculateur 5 procède à cette évaluation et celui-ci comporte alors des moyens de détermination du type de roulage du véhicule. Ces moyens sont désignés par la référence générale 10 sur cette figure 2. A chaque type de roulage identifié (i), on associe une masse de carbone élémentaire issue par exemple d'un tableau d'émissions élémentaires prédéterminées.

Ainsi, à chaque type de roulage identifié correspond une masse élémentaire de carbone émise en moyenne sur la période de calcul du type de roulage, comme cela est calculé par les moyens désignés par la référence générale 11 sur cette figure.

Ensuite, cette masse élémentaire est corrigée par des moyens de correction désignés par la référence générale 12, en fonction de la température du liquide de refroidissement du moteur du véhicule telle qu'acquise par des moyens 13, de la pression atmosphérique $P_{atmo}$ telle que délivrée par des moyens d'acquisition 14a et de la température d'air extérieur telle que délivrée par des moyens d'acquisition 14b.

La masse élémentaire est alors corrigée selon la relation suivante :

> **masse élémentaire corrigée(i) = Correction température eau * Correction altimétrique* Correction température air extérieur * masse élémentaire**

La correction peut alors être apportée sous la forme d'une courbe fonction de la température du liquide de refroidissement, d'une courbe fonction de la température d'air extérieur et d'une courbe fonction de la pression atmosphérique.

L'évaluation des corrections peut être effectuée sur des cycles de référence prédéterminés. L'objectif de cette correction est d'obtenir un ordre de grandeur réaliste de la majoration des émissions lorsque les conditions de température et de pression varient.

Dans les conditions où l'utilisateur fait fonctionner son véhicule systématiquement hors des conditions normales, l'indicateur de charge doit en effet rester relativement objectif avec une tolérance par exemple de l'ordre de 10% de la masse courante effective.

Ensuite, ces masses élémentaires sont cumulées. En effet, après chaque période de $t_{sec}$, on intègre une nouvelle masse de carbone élémentaire selon la relation suivante :

$$\text{masse totale (t)} = \sum_{n} \text{masse élémentaire (n)}$$

Ce cumul est réalisé par l'intermédiaire des moyens désignés par la référence générale 15 sur la fig. 2.

On calcule également le volume de résidus de combustion d'un additif mélangé au carburant d'alimentation du moteur si un tel additif est utilisé, le volume de cendres de l'huile de lubrification du moteur et le volume de cendres du carburant d'alimentation du moteur.

Pour cela, on estime la quantité de cendres provenant du lubrifiant et du carburant quel que soit le concept du filtre à particules, c'est-à-dire par exemple pour un filtre à particules catalysé, un filtre à particules imprégné, un filtre à particules non revêtu sans additif ou un filtre à particules avec additif, mais également la quantité de résidus de combustion de l'additif qui est nulle pour un filtre à particules catalysé ou imprégné ou non revêtu sans additif. La quantité de résidus métalliques provenant du moteur et de la ligne d'échappement et de particules non filtrées à l'admission, peut être considérée comme négligeable comme cela a été confirmé par l'analyse de plusieurs échantillons de résidus.

La masse de cendres du lubrifiant accumulées dans le filtre dépend de la consommation en huile de lubrification du moteur et de la teneur en cendres du lubrifiant utilisé. Pour simplifier ce calcul, on prend comme hypothèse que le conducteur du véhicule utilise durant toute la vie du véhicule, l'huile préconisée par le constructeur, c'est à dire avec un taux de cendres constant. L'estimation de la masse de cendres de l'huile peut alors se faire de différentes façons. On peut ainsi utiliser une valeur prédéterminée de consommation d'huile pour le véhicule, valeur qui dépend de l'application moteur/véhicule considérée.

On peut également utiliser un modèle de type intégrateur prenant en compte une consommation d'huile instantanée fonction des conditions de fonctionnement du moteur et typiquement fonction du régime et du couple moteur.

D'autres modèles plus complexes prenant en compte la composition de l'huile, c'est à dire par exemple sa teneur en phosphore, en calcium, en potassium, etc., la qualité de l'huile ou un indicateur de maintenance de l'huile, peuvent également être envisagés pour estimer la quantité de cendres accumulées dans le filtre à particules.

Dans le cas de l'utilisation de la composition type d'une huile, la masse de cendres est calculée en fonction de la nature des composés issus de la combustion de l'huile, par exemple le phosphore se retrouve dans le filtre sous la forme de $PO_4$, le zinc sous la forme de $ZnO$ et le calcium sous la forme de $Ca\text{-}SO_4$, etc.

La masse de cendres provenant du carburant accumulée dans le filtre dépend directement de la consommation en carburant du véhicule et de la teneur en cendres de ce carburant. Pour simplifier le calcul on prend comme hypothèse que la teneur en cendres du carburant est constante quelle que soit la source d'approvisionnement en carburant. Le calcul le plus simple de la quantité de cendres du carburant consiste à utiliser un intégrateur qui multiplie la consommation instantanée par la teneur en cendres du carburant et par le pas de temps de calcul de la consommation instantanée.

Dans le cas où un additif est utilisé, la masse de résidus provenant de cet additif accumulée dans le filtre dépend de la quantité d'additif qui a été injectée dans le réservoir de carburant. Il existe également plusieurs possibilités d'estimation de cette masse. On peut par exemple utiliser l'information de quantité d'additif injecté provenant du calculateur de gestion du système de dosage de l'additif mais on peut également prendre en compte la consommation cumulée de carburant depuis le début de vie du véhicule en la multipliant par la valeur de dosage nominal de l'additif.

Le tableau ci-dessous donne les différentes définitions des symboles qui sont utilisés dans les relations suivantes :

| Désignation | Description | Unité |
|---|---|---|
| $V_0$ | Volume total du FAP neuf | l |
| Conso. Huile | Consommation kilométrique d'huile du moteur | l/km |
| $\rho_{res}$ | Densité des résidus provenant de l'additif et du lubrifiant | g/l |
| Rapport d'ouverture | Taux de surface frontale ouverte pour la filtration des particules et le stockage des résidus. | -- |
| $K_{additif}$ | Ratio masse de résidus d'additif/masse d'additif utilisée (dosage) | -- |
| $\rho_{huile}$ | Densité de l'huile | g/l |
| $K_{carburant}$ | Ratio masse de cendres venant du carburant / masse d'additif utilisée | -- |
| Taux de cendres | Taux de résidus provenant de la combustion du lubrifiant | % |
| Distance FAP neuf Distance FAP neuf | Distance parcourue depuis l'état FAP neuf ou nettoyé | km |
| Quantité totale d'additif | Masse d'additif injecté depuis l'état FAP neuf ou nettoyé | |
| Volume libre | Volume libre minimal pour stocker les particules | l |

En ce qui concerne l'additif, dans le système selon l'invention, il peut être prévu des moyens 16 permettant de déterminer la quantité totale d'additif injecté et des moyens 17 de calcul du volume de résidus de combustion de cet additif selon la relation :

$$\text{Volume de résidus (t)} = \text{Quantité totale d'additif (t)} * K_{additif}/\text{Rapport d'ouverture} * \rho_{res}$$

Dans le système selon l'invention, il est également prévu des moyens 18 de calcul du volume de cendres de l'huile de lubrification du moteur suivant la relation :

$$\text{Volume cendres huile} = \text{Conso. Huile} * \rho_{huile} * \text{Distance FAP neuf} * \text{Taux de cendres}/(100*\text{Rapport d'ouverture}*\rho_{res})$$

La variable Distance FAP neuf correspond à la distance parcourue par le véhicule depuis l'état FAP neuf ou nettoyé et est déterminée par des moyens 19 de comptage.

Dans le système selon l'invention, il est également prévu des moyens de calcul du volume de cendres du carburant d'alimentation du moteur, ces moyens étant désignés par la référence générale 20, et mettant également en oeuvre pour ce calcul la quantité totale d'additif utilisé, selon la relation :

$$\text{Volume cendres carburant (t) = Quantité totale d'additif(t) * Kcarburant/(Rapport d'ouverture *} \rho_{res})$$

Toutes ces informations sont ensuite utilisées par des moyens de calcul du volume utile des moyens de dépollution à partir du volume total de ces moyens à l'état neuf ou nettoyé et des volumes de cendres et de résidus calculés précédemment.

Ces moyens sont désignés par la référence générale 21 sur cette fig. 2 et calculent le volume utile à partir de la relation :

$$\text{Volume utile (t) = } V_0 \text{ – Volume de résidus (t) – Volume cendres huile – Volume cendres carburant}$$

Ces différentes informations peuvent également être utilisées comme cela est connu par ailleurs, pour calculer des indicateurs d'après-vente permettant de demander par exemple à un client d'effectuer une opération de maintenance du filtre à particules, lorsque le volume utile atteint une valeur limite minimale prédéterminée.

Ensuite, les informations relatives à la masse totale et au volume utile, telles que calculées précédemment, sont utilisées par des moyens de détermination de l'état de charge des moyens de dépollution, désignés par la référence générale 22 sur cette fig. 2, pour calculer cet état de charge en utilisant la relation suivante :

$$\text{Etat de charge \% (t) = masse totale (t) / (Volume utile (t) * Densité max)}$$

Dans le cas de difficultés de régénération, il est possible que, suite à une accumulation de régénérations échouées, la charge du filtre dépasse 100%.

Dans cette formule, Densité max représente la densité maximale des dépôts sur les moyens de dépollution.

Cet état de charge est ensuite délivré à des moyens 23 de comparaison de l'état de charge calculé à des valeurs de seuil de charge faible, moyen bas et moyen haut, telles que désignées par la référence générale 24 sur cette fig. 2, pour délivrer des informations d'état de charge faible, moyen bas, moyen haut ou élevé des moyens de dépollution.

Il est également à noter que le système d'évaluation selon l'invention peut comporter des moyens de mesure de la température en amont des moyens de dépollution, tels que désignés par la référence générale 25 sur cette figure et de comparaison de celle-ci à une valeur de seuil de régénération spontanée des moyens de dépollution, dans des moyens de comparaison 26, pour, si la température en amont du filtre dépasse cette valeur de seuil pendant une période de temps prédéterminée, détecter une régénération spontanée des moyens de dépollution et délivrer une information correspondante aux moyens d'évaluation de l'état de charge 22.

De même, une réinitialisation (RESET) peut également être déclenchée dans les services après-vente du constructeur en cas de nettoyage ou de remplacement du filtre à particules.

Bien entendu, d'autres modes de réalisation peuvent être envisagés. En particulier, différents modes de réalisation des moyens de dépollution peuvent être prévus.

Ainsi par exemple, les moyens de dépollution et les moyens formant catalyseur d'oxydation peuvent être intégrés dans un seul et même élément, notamment sur un même substrat.

A titre d'exemple, un filtre à particules intégrant la fonction d'oxydation peut être envisagé.

Ces moyens de dépollution peuvent également être imprégnés avec une formulation SCR, assurant une fonction d'oxydation CO/HC de façon classique.

De même un piège à NOx intégrant une telle fonction d'oxydation peut également être envisagé, que celui-ci soit additivé ou non.

Cette fonction d'oxydation et/ou de piège à NOx peut être remplie par exemple par un additif mélangé au carburant.

Dans ce cas, le carburant peut en effet comporter un additif destiné à se déposer avec les particules auxquelles il est mélangé sur les moyens de dépollution pour faciliter leur régénération.

De même, le moteur peut être associé ou non à un turbocompresseur.

**Revendications**

1. Système d'évaluation de l'état de charge en suies de moyens de dépollution (1) intégrés dans une ligne d'échappement (2) d'un moteur (3) de véhicule automobile, **caractérisé en ce qu'**il comporte :

   - des moyens (10) de détermination du type de roulage du véhicule,
   - des moyens (11) de détermination, en fonction de ce type de roulage déterminé, d'une masse de carbone élémentaire émise par le moteur,
   - des moyens (15) de cumul de ces masses élémentaires durant le fonctionnement du moteur pour obtenir une masse totale,
   - des moyens (18) de calcul du volume de cendres de l'huile de lubrification du moteur,
   - des moyens (20) de calcul du volume de cendres du carburant d'alimentation du moteur,
   - des moyens (21) de calcul du volume utile des moyens de dépollution à partir d'un volume total de ces moyens à l'état neuf ou nettoyé et des volumes de cendres et de résidus calculés précédemment, et
   - des moyens (22) de calcul de l'état de charge des moyens de dépollution (1) à partir de la masse totale, du volume utile et de la densité maximale des dépôts sur les moyens de dépollution.

2. Système d'évaluation selon la revendication 1, **caractérisé en ce qu'**il comporte en outre des moyens (12,13,14) de correction de la masse élémentaire déterminée, en fonction de la température du liquide de refroidissement du moteur, de la température d'air extérieur et de la pression atmosphérique.

3. Système d'évaluation selon la revendication 1 ou 2, **caractérisé en ce qu'**il comporte en outre des moyens (17) de calcul du volume de résidus de combustion d'un additif mélangé au carburant d'alimentation du moteur raccordés aux moyens (21) de calcul du volume utile.

4. Système d'évaluation selon l'une quelconque des revendications précédentes, **caractérisé en ce qu'**il comporte en outre des moyens (23) de comparaison de l'état de charge calculé à des valeurs de seuil (24) de charge faible, moyen bas et moyen haut pour délivrer des informations d'état de charge faible, moyen bas, moyen haut ou élevé des moyens de dépollution.

5. Système d'évaluation selon l'une quelconque des revendications précédentes, **caractérisé en ce qu'**il comporte des moyens (25) de mesure de la température en amont des moyens de dépollution et des moyens (26) de comparaison de celle-ci à une valeur de seuil de régénération spontanée des moyens de dépollution (1) pour, si la température en amont du filtre dépasse cette valeur de seuil pendant une période de temps prédéterminée, détecter une régénération spontanée des moyens de dépollution.

6. Système d'évaluation selon l'une quelconque des revendications précédentes, **caractérisé en ce que** les moyens de dépollution (1) comprennent un filtre à particules.

7. Système d'évaluation selon la revendication 6, **caractérisé en ce que** le filtre à particules est catalysé.

8. Système d'évaluation selon l'une quelconque des revendications précédentes, **caractérisé en ce que** les moyens de dépollution (1) comprennent un piège à NOx.

9. Système d'évaluation selon l'une quelconque des revendications précédentes, **caractérisé en ce que** le carburant comporte un additif destiné à se déposer avec des particules auxquelles il est mélangé, sur les moyens de dépollution pour faciliter leur régénération.

10. Système d'évaluation selon l'une quelconque des revendications 1 à 8, **caractérisé en ce que** le carburant comporte un additif formant piège à NOx.

11. Système d'évaluation selon l'une quelconque des revendications précédentes, **caractérisé en ce que** les moyens de dépollution (1) sont imprégnés avec une formulation SCR, assurant une fonction d'oxydation CO/HC.

12. Système d'évaluation selon l'une quelconque des revendications précédentes, **caractérisé en ce que** le moteur est associé à un turbocompresseur.

**Claims**

1. System for evaluating the soot load state of pollution control means (1) built into an exhaust line (2) of a motor vehicle engine (3), **characterized in that** it comprises:

   - means (10) for determining the type of driving of the vehicle,
   - means (11) for determining, according to the said type of driving determined, a mass of elementary carbon emitted by the engine,
   - means (15) for cumulating these elementary masses during the running of the engine to obtain a total mass,
   - means (18) for calculating the volume of ash in the engine lubricating oil,
   - means (20) for calculating the volume of ash in the fuel fed to the engine,
   - means (21) for calculating the useful volume of the pollution control means from the total volume of the said means in the new or cleaned state and the volumes of ash and waste calculated previously, and
   - means (22) for calculating the load state of the pollution control means (1) from the total mass, the useful volume and the maximum density of the deposits on the pollution control means.

2. Evaluation system according to Claim 1, **characterized in that** it further comprises means (12, 13, 14) for correcting the elementary mass determined, according to the temperature of the engine coolant, the outdoor air temperature, and the atmospheric pressure.

3. Evaluation system according to either of Claims 1 and 2, **characterized in that** it further comprises means (17) for calculating the volume of combustion waste of an additive mixed with the fuel fed to the engine connected to the means (21) for calculating the useful volume.

4. Evaluation system according to any one of the preceding claims, **characterized in that** it further comprises means (23) for comparing the calculated load state to threshold values (24) of low, medium low and medium high load, for delivering data on the low, medium low, medium high or high load state of the pollution control means.

5. Evaluation system according to any one of the preceding claims, **characterized in that** it comprises means (25) for measuring the temperature upstream of the pollution control means and means (26) for comparing the said temperature to a threshold value of spontaneous regeneration of the pollution control means (1) so that, if the temperature upstream of the filter exceeds the said threshold value for a predefined time interval, a spontaneous regeneration of the pollution control means can be detected.

6. Evaluation system according to any one of the preceding claims, **characterized in that** the pollution control means (1) comprise a particulate filter.

7. Evaluation system according to Claim 6, **characterized in that** the particulate filter is catalysed.

8. Evaluation system according to any one of the preceding claims, **characterized in that** the pollution control means (1) comprise a NOx trap.

9. Evaluation system according to any one of the preceding claims, **characterized in that** the fuel comprises an additive for deposition, together with the particulates with which it is mixed, on the pollution control means to facilitate their regeneration.

10. Evaluation system according to any one of Claims 1 to 8, **characterized in that** the fuel comprises an additive forming a NOx trap.

11. Evaluation system according to any one of the preceding claims, **characterized in that** the pollution control means (1) are impregnated with an SCR formulation, providing a CO/HC oxidation function.

12. Evaluation system according to any one of the preceding claims, **characterized in that** the engine is associated with a turbocharger.

**EP 1 784 561 B1**

**Patentansprüche**

1. System zum Bewerten des Rußladungszustandes in Reinigungsmitteln (1), die in die Auspuffanlage (2) eines Kraftfahrzeugmotors (3) eingebaut sind, **dadurch gekennzeichnet, dass** es Folgendes aufweist:

   - Mittel (10) zur Bestimmung des Fahrprofils des Fahrzeugs,
   - Mittel (11) zur Bestimmung einer Masse an elementarem Kohlenstoff, die vom Motor ausgestoßen wird, und zwar in Abhängigkeit vom festgestellten Fahrprofil,
   - Mittel (15) zum Kumulieren dieser elementaren Massen während des Motorbetriebs, um eine Gesamtmasse zu erhalten,
   - Mittel (18) zum Berechnen des Aschenvolumens im Motorschmieröl,
   - Mittel (20) zum Berechnen des Aschenvolumens im Kraftstoff, der dem Motor zugeführt wird,
   - Mittel (21) zum Berechnen des Nutzvolumens der Reinigungsmittel, wobei das Gesamtvolumen dieser Mittel in neuem oder gereinigtem Zustand sowie die zuvor berechneten Volumina an Aschen und Rückständen zu Grunde gelegt werden, und
   - Mittel (22) zum Berechnen des Ladungszustandes der Reinigungsmittels (1), wobei die Gesamtmasse, das Nutzvolumen und die maximale Dichte der Ablagerungen auf den Reinigungsmitteln zu Grunde gelegt werden.

2. Bewertungssystem gemäß Anspruch 1, **dadurch gekennzeichnet, dass** es darüber hinaus Mittel (12, 13, 14) aufweist, welche dazu dienen, die bestimmte elementare Masse in Abhängigkeit von der Temperatur der Kühlflüssigkeit des Motors, von der Temperatur der Außenluft und vom Atmosphärendruck zu korrigieren.

3. Bewertungssystem gemäß den Ansprüchen 1 oder 2, **dadurch gekennzeichnet, dass** es darüber hinaus Mittel (17) aufweist, die dazu dienen, das Volumen an Verbrennungsrückständen eines Additivs zu berechnen, welches dem Kraftstoff, der dem Motor zugeführt wird, beigemischt wird, und die mit den Mitteln (21) zur Berechnung des Nutzvolumens verbunden sind.

4. Bewertungssystem gemäß einem beliebigen der vorhergehenden Ansprüche, **dadurch gekennzeichnet, dass** es darüber hinaus Mittel (23) aufweist, die dazu dienen, den berechneten Ladungszustand mit Schwellenwerten (24) für eine geringe, eine geringe bis mittlere, und eine mittlere bis hohe Ladung zu vergleichen, um Information über einen geringen, geringen bis mittleren, mittleren bis hohen oder hohen Ladungszustand der Reinigungsmittel zu liefern.

5. Bewertungssystem gemäß einem beliebigen der vorhergehenden Ansprüche, **dadurch gekennzeichnet, dass** es Mittel (25) aufweist, die dazu dienen, die Temperatur im Vorfeld der Reinigungsmittel zu messen, sowie Mittel (26), die dazu dienen, diese mit einem Schwellenwert für die spontane Regeneration der Reinigungsmittel (1) zu vergleichen, um dann eine spontane Regeneration der Reinigungsmittel zu detektieren, wenn die Temperatur im Vorfeld des Filters diesen Wert für eine zuvor festgelegte Zeitdauer überschreitet.

6. Bewertungssystem gemäß einem beliebigen der vorhergehenden Ansprüche, **dadurch gekennzeichnet, dass** die Reinigungsmittel (1) einen Partikelfilter umfassen.

7. Bewertungssystem gemäß Anspruch 6, **dadurch gekennzeichnet, dass** der Partikelfilter katalytisch unterstützt ist.

8. Bewertungssystem gemäß einem beliebigen der vorhergehenden Ansprüche, **dadurch gekennzeichnet, dass** die Reinigungsmittel (1) eine NOx-Falle umfassen.

9. Bewertungssystem gemäß einem beliebigen der vorhergehenden Ansprüche, **dadurch gekennzeichnet, dass** der Kraftstoff ein Additiv aufweist, welches dazu bestimmt ist, sich gemeinsam mit den Partikeln, denen es beigemischt wird, auf den Reinigungsmitteln abzulagern, um deren Regeneration zu erleichtern.

10. Bewertungssystem gemäß einem beliebigen der Ansprüche 1 bis 8, **dadurch gekennzeichnet, dass** der Kraftstoff ein Additiv aufweist, welches eine NOx-Falle bildet.

11. Bewertungssystem gemäß einem beliebigen der vorhergehenden Ansprüche, **dadurch gekennzeichnet, dass** die Reinigungsmittel (1) mit einer SCR-Formulierung durchtränkt sind, die eine CO/HC-Oxidation gewährleistet.

12. Bewertungssystem gemäß einem beliebigen der vorhergehenden Ansprüche, **dadurch gekennzeichnet, dass** der

9

Motor mit einem Turbolader verbunden ist.

EP 1 784 561 B1

**FIG.1**

*FIG.2*

**RÉFÉRENCES CITÉES DANS LA DESCRIPTION**

**Documents brevets cités dans la description**

- FR 2829798 A